# EUROPEAN PATENT SPECIFICATION

(11) **EP 3 312 410 B1**
(45) Date of publication and mention of the grant of the patent: **15.05.2019**
(21) Application number: 15895616.9
(22) Date of filing: 18.06.2015
(51) Int. Cl.: F02N 11/08, B60R 16/03, F02N 11/04, F02N 3/04, H02J 7/00, H02J 7/14

(54) **POWER SUPPLYING SYSTEM FOR VEHICLE, AND CONTROL METHOD OF POWER SUPPLYING SYSTEM FOR VEHICLE**
STROMVERSORGUNGSSYSTEM FÜR FAHRZEUG UND STEUERUNGSVERFAHREN FÜR STROMVERSORGUNGSSYSTEM FÜR FAHRZEUG
SYSTÈME D'ALIMENTATION EN ÉNERGIE POUR VÉHICULE, ET PROCÉDÉ DE COMMANDE DE SYSTÈME D'ALIMENTATION EN ÉNERGIE POUR VÉHICULE

(43) Date of publication of application: 25.04.2018
(73) Proprietor: Shindengen Electric Manufacturing Co., Ltd., Tokyo 100-0004 (JP)
(72) Inventor: ARAI Tatsuya, Hanno-shi Saitama 357-8585 (JP)
(74) Representative: AWA Sweden AB
(86) International application number: PCT/JP2015/067540
(87) International publication number: WO 2016/203596

(56) References cited:
- EP-A1- 2 803 852
- WO-A1-2013/105238
- WO-A1-2014/017198
- JP-A- 2001 069 796
- JP-A- 2002 098 032
- JP-A- 2002 098 032
- JP-A- 2015 068 297
- JP-A- 2015 068 297

## Description

The present invention relates to a vehicular power supply system and a control method for a vehicular power supply system.

### Background Art

In the related art, proposed is a vehicular power supply system adapted to start an engine or charge a battery of, for example, a motorcycle or the like (refer to Japanese Patent No. 5283784 or its European patent application EP 2 803 852 A1, for example).

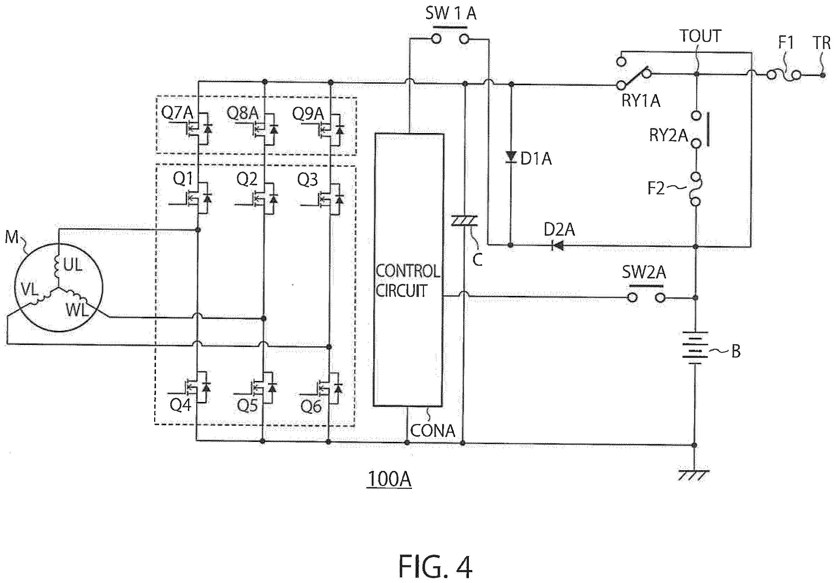

This vehicular power supply system in the related art includes, for example: a battery B connected to an engine of a vehicle; two relay circuits RY1A and RY2A, two fuses F1 and F2; and a power conversion unit including three-phase bridge circuits Q1 to Q6 and transistors Q7A to Q9A added in order to improve power generation loss caused by imbalance between motor specifications and power generation specifications; a control circuit CONA adapted to control this power conversion unit and the relay circuits RY1A and RY2A; a main switch SW1A and a starter switch SW2A controlled by a user; diodes D1A and D2A; and a smoothing capacitor C (FIG. 4).

### Summary of Invention

### Technical Problem

In an above-described vehicular power supply system 100A in related art, there may be a problem in which power loss is caused by the transistors Q7A to Q9A constituting a switch circuit and torque is decreased at the time of starting an engine in the case of performing motor driving for a motor M.

Additionally, there may be a problem in which charging efficiency is degraded due to power loss caused by the transistors Q7A to Q9A during battery charge.

Furthermore, to ensure starting performance at the time of kick drive, it is necessary to perform individual control by using two relay circuits RY1A and RY2A such that generated power is not absorbed in a deteriorated battery B. In other words, there may be a problem in which two operation circuits are needed for the relay circuits RY1A and RY2A and also the relay circuit RY1A is needed to be constantly turned on during power generation, thereby increasing power consumption.

Therefore, the present invention is directed to providing a vehicular power supply system that can reduce which the number of relay circuits to one while reducing power loss by a switch circuit arranged in a charging path of a battery.

### Solution to Problem

A vehicular power supply system, according to claim 1.

In the vehicular power supply system, wherein the control circuit detects voltage at one end of the smoothing capacitor, and acquires charging voltage at the battery based on the detected voltage.

In the vehicular power supply system, the vehicular power supply system further comprising:
a first detection bipolar transistor having a base connected to the other end of the main switch and an emitter connected to the grounding wire; and
a second detection bipolar transistor having a base connected to a collector of the first detection bipolar transistor, an emitter connected to the cathode of the second control body diode, and a collector connected to the control circuit,
wherein the control circuit detects voltage at the battery based on voltage at the emitter of the second detection bipolar transistor or detects whether the battery is in an open state.

In the vehicular power supply system, the vehicular power supply system further comprising:
a relay coil having one end connected to the positive electrode of the battery; and
a relay switching element having one end connected to the other end of the relay coil and the other end connected to the grounding wire,
wherein the control circuit provides electrical connection with the relay coil by turning on the relay switching element while not providing electrical connection with the relay coil by turning off the relay switching element.

In the vehicular power supply system, wherein a load is connected between the output terminal and the grounding wire, and the load is any one of a fuel pump of the engine, an injector of the engine, and an ignition coil of the engine.

In the vehicular power supply system, wherein the three-phase bridge circuit includes:
a first MOS transistor having a drain connected to the one end of the three-phase bridge circuit and a source connected to one end of a U-phase coil of the motor, and having gate voltage controlled by the control circuit;
a first diode having a cathode connected to the drain of the first MOS transistor and an anode connected to the source of the first MOS transistor;
a second MOS transistor having a drain connected to the one end of the three-phase bridge circuit and a source connected to one end of a V-phase coil of the motor, and having gate voltage controlled by the control circuit;
a second diode having a cathode connected to the drain of the second MOS transistor and an anode connected to the source of the second MOS transistor;
a third MOS transistor having a drain connected to the one end of the three-phase bridge circuit and a source connected to one end of a W-phase coil of the motor, and having gate voltage controlled by the control circuit;
a third diode having a cathode connected to the drain of the third MOS transistor and an anode connected to the source of the third MOS transistor;
a fourth MOS transistor having a drain connected to the one end of the U-phase coil of the motor and a source connected to the other end of the three-phase bridge circuit, and having gate voltage controlled by the control circuit;
a fourth diode having a cathode connected to the drain of the fourth MOS transistor and an anode connected to the source of the fourth MOS transistor;
a fifth MOS transistor having a drain connected to the one end of the V-phase coil of the motor and a source connected to the other end of the three-phase bridge circuit, and having gate voltage controlled by the control circuit;
a fifth diode having a cathode connected to the drain of the fifth MOS transistor and an anode connected to the source of the fifth MOS transistor;
a sixth MOS transistor having a drain connected to the one end of the W-phase coil of the motor and a source connected to the other end of the three-phase bridge circuit, and having gate voltage controlled by the control circuit; and
a sixth diode having a cathode connected to the drain of the sixth MOS transistor and an anode connected to the source of the sixth MOS transistor.

A control method for a vehicular power supply system, according to claim 7 respectively claims 8-14.

### Advantageous Effects of Invention

The vehicular power supply system according to one aspect of the present invention includes:
the motor connected to the engine of the vehicle; the main switch controlled to be turned on or off; the starter switch controlled to be turned on or off and used to start the engine; the battery having the positive electrode connected to the one end of the starter switch and the negative electrode connected to the grounding wire; the relay circuit adapted to electrically connect the first contact to the second contact connected to the positive electrode when turned on, and adapted to interrupt electrical connection between the first contact and the second contact when turned off; the smoothing capacitor having the one end connected to an output terminal and the other end connected to the negative electrode of the battery; the three-phase bridge circuit having the one end connected to the first contact and one end of the main switch, having the other end connected to the grounding wire, and adapted to perform motor driving for the motor by performing rectification control or phase control for AC power supplied from the motor and outputting DC power from between the one end and the other end or by converting DC power of the battery to AC power and supplying the AC power to the motor; the first control MOS transistor having the one end connected to the one end of the three-phase bridge circuit and the other end connected to the output terminal; the first control body diode having the cathode connected to the one end of the first control MOS transistor and the anode connected to the other end of the first control MOS transistor; the second control MOS transistor having the one end connected to the output terminal and the other end connected to the positive electrode of the battery; the second control body diode having the cathode connected to the other end of the second control MOS transistor and the anode connected to the one end of the second control MOS transistor; and the control circuit connected between the other end of the main switch and the grounding wire, supplied with power from the other end of the main switch, and adapted to control the three-phase bridge circuit, relay circuit, first control MOS transistor, and second control MOS transistor.

Consequently, in the vehicular power supply system, the necessary relay circuit is only one relay circuit connected between the positive electrode of the battery and the one end of the three-phase bridge circuit, and the number of relay circuits can be reduced to one.

Furthermore, a switch circuit (first and second control MOS transistors) is arranged in the charging path during rectification control (synchronous rectification or open control), and one relay circuit is arranged in the charging path during phase control of the three-phase bridge circuit. Consequently, power loss by the switch circuit in battery charge during the phase control can be reduced.

Particularly, in the case where charging voltage at the battery is less than target voltage, the control circuit turns on the relay circuit, controls the three-phase bridge circuit to perform phase control for the AC power supplied from the motor, and outputs the DC power from between the one end and the other end of the three-phase bridge circuit, and further turns off the first and second control MOS transistors.

On the other hand, in the case where the charging voltage at the battery is the target voltage or more, the control circuit turns off the relay circuit, controls the three-phase bridge circuit to perform rectification control for the AC power supplied from the motor, outputs the DC power from between the one end and the other end of the three-phase bridge circuit, and turns on the second control MOS transistor and further switches on/off the first control MOS transistor such that the charging voltage at the battery approaches the target voltage.

Thus, in the case where the charging voltage at the battery is less than the target voltage, the battery is charged via the relay circuit while phase control is performed in the three-phase bridge circuit. Then, after the charging voltage reaches the target voltage, phase control of the three-phase bridge circuit is stopped, rectification control is started, and the charging voltage can be controlled by the switch circuit.

As described above, according to the vehicular power supply system of the present invention, the number of relay circuits can be reduced to one while power loss by the switch circuit arranged in the charging path of the battery is reduced.

### Brief Description of Drawings

[FIG. 1] FIG. 1 is a diagram illustrating an exemplary configuration of a vehicular power supply system 100 according to a first embodiment that is one aspect of the present invention.
[FIG. 2] FIG. 2 is a flowchart illustrating the exemplary operation of the vehicular power supply system 100 illustrated in FIG. 1 in the case of performing the cell drive.
[FIG. 3] FIG. 3 is a flowchart illustrating the exemplary operation of the vehicular power supply system 100 illustrated in FIG. 1 in the case of performing kick drive.
[FIG. 4] FIG. 4 is a diagram illustrating an exemplary configuration of a vehicular power supply system in the related art.

### Description of Embodiments

Embodiments of the present invention will be described below with reference to the drawings.

### [First Embodiment]

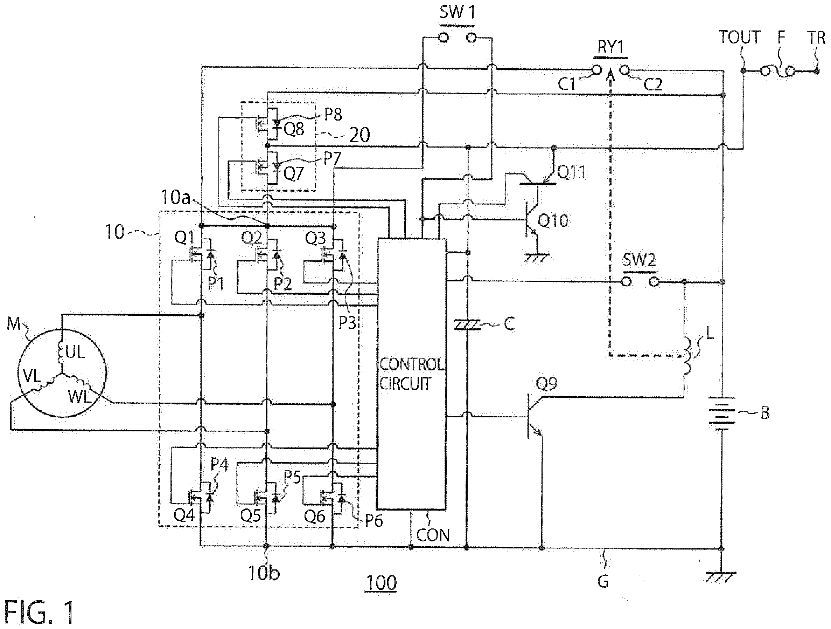

FIG. 1 is a diagram illustrating an exemplary configuration of a vehicular power supply system 100 according to a first embodiment that is one aspect of the present invention.

As illustrated in FIG. 1, the vehicular power supply system 100 includes a motor (three-phase brushless motor) M, a main switch SW1, a starter switch SW2, a battery B, a relay circuit RY1, a relay coil L, a relay switching element Q9, a first detection bipolar transistor (NPN bipolar transistor) Q10, a second detection bipolar transistor (PNP bipolar transistor) Q11, a smoothing capacitor C, a three-phase bridge circuit 10, a switch circuit 20, a control circuit CON, an output terminal TOUT, a load terminal TR, a fuse F, and a grounding wire G.

The vehicular power supply system 100 is mounted on a vehicle (for example, a two-wheel vehicle) not illustrated.

Additionally, the motor M is connected to an engine (not illustrated) of the above-mentioned vehicle. The motor M functions as a starter motor that is a power source to start the engine and also functions as a power generator that generates power from power of the engine after starting the engine.

The main switch SW1 has one end connected to a first contact C1 and one end 10a of the three-phase bridge circuit, and the main switch SW1 has the other end connected to the control circuit CON.

The main switch SW1 is controlled to be turned on or off by a user. The main switch SW1 provides electrical connection between one end and the other end thereof when turned on while the main switch interrupts the electrical connection between the one end and the other end when turned off.

The starter switch SW2 has one end connected to a positive electrode of the battery B, and the starter switch SW2 has the other end connected to the control circuit CON.

The starter switch SW2 is controlled to be turned on or off by a user. The starter switch SW2 provides electrical connection between one end and the other end thereof when turned on while the starter switch interrupts the electrical connection between the one end and the other end when turned off.

The engine is started when the starter switch SW2 is turned on.

Additionally, the battery B has the positive electrode connected to the one end of the starter switch SW2 and a negative electrode connected to the grounding wire G. Note that grounding wire G is grounded.

Furthermore, the fuse F is connected between the output terminal TOUT and the load terminal TR.

A load (not illustrated) is connected between the load terminal TR (output terminal TOUT) and the grounding wire G. This load is, for example, any one of a fuel pump of the engine, an injector of the engine, and an ignition coil of the engine, or a head lamp, a tail lamp, a stop lamp, a winker lamp, or the like.

Output voltage at the output terminal TOUT is supplied to the load via the fuse F and the load terminal TR.

Furthermore, the smoothing capacitor C has one end connected to the output terminal TOUT and the other end connected to a negative electrode of the battery B (grounding wire G).

The control circuit CON is connected between the other end of the main switch SW1 and the grounding wire G. The control circuit CON is supplied with power from the other end of the main switch SW1. The control circuit CON includes the three-phase bridge circuit 10, relay circuit RY1, switch circuit 20, (first control MOS transistor Q7 and second control MOS transistor Q8) first detection bipolar transistor Q10, and second detection bipolar transistor (PNP bipolar transistor) Q11.

Furthermore, the control circuit CON can detect a rotational speed of the motor M.

Additionally, in the case where a detected rotational speed of the motor M is a preset start rotational speed (e.g., 2000 rpm) or more, the control circuit CON determines that the engine connected to the motor M has been started.

On the other hand, in the case where a detected rotational speed of the motor M is less than the start rotational speed, the control circuit CON determines that the engine is on the way of start.

Additionally, the control circuit CON detects voltage at one end of the smoothing capacitor C, and acquires charging voltage at the battery B (voltage at the positive electrode of the battery B) based on the detected voltage.

Furthermore, the control circuit CON determines that the main switch SW1 is turned on when power is supplied from the other end of the main switch SW1.

On the other hand, the control circuit CON determines that the main switch SW1 is turned off when power is not supplied from the other end of the main switch SW1.

Additionally, in the case where a signal corresponding to voltage at the positive electrode of the battery B is received from the other end of the starter switch SW2 when the starter switch SW2 is turned on, the control circuit CON determines that the starter switch SW2 is turned on.

On the other hand, in the case where a signal corresponding to the voltage at the positive electrode of the battery B is not received from the other end of the starter switch SW2 when the starter switch SW2 is turned off, the control circuit CON determines that the starter switch SW2 is turned off.

Additionally, as illustrated in FIG. 1, when the relay circuit RY1 is turned on, the relay circuit RY1 provides electrical connection between the first contact C1 and the second contact C2 connected to the positive electrode of the battery B. On the other hand, when the relay circuit RY1 is turned off, electrical connection between the first contact C1 and the second contact C2 is interrupted.

Furthermore, the relay coil L has one end connected to the positive electrode of the battery B.

Additionally, the relay switching element Q9 has one end connected to the other end of the relay coil L and the other end connected to the grounding wire G. On/off of the relay switching element Q9 is controlled by the control circuit CON.

For example, as illustrated in FIG. 1, the relay switching element Q9 is an NPN bipolar transistor having a collector connected to the other end of the first relay coil L and an emitter connected to the grounding wire G, and having base current controlled by the control circuit CON.

Here, the control circuit CON turns on the relay circuit RY1 by energizing the relay coil L. In the example of FIG. 1, the control circuit CON energizes the relay coil L by turning on the relay switching element Q9.

Then, the relay circuit RY1 provides electrical connection between the one end 10a of the three-phase bridge circuit and the positive electrode of the battery B when the relay coil L is turned on by being energized.

On the other hand, the control circuit CON turns off the relay circuit RY1 by not energizing the relay coil L. In the example of FIG. 1, the control circuit CON does not energize the relay coil L by turning off the relay switching element Q9.

Then, the relay circuit RY1 interrupts electrical connection between the one end 10a of the three-phase bridge circuit and the positive electrode of the battery B when the relay coil L is turned off by not being energized.

Additionally, the three-phase bridge circuit 10 has one end connected to the first contact C1 and the one end of the main switch SW1, and has the other end connected to the grounding wire G.

The three-phase bridge circuit 10 performs motor driving for the motor M by performing rectification control (synchronous rectification or open control) or phase control (retard control) for AC power supplied from the motor M, and outputs DC power from between the one end and the other end, or by converting DC power of the battery B to AC power and supplying the same to the motor M.

As illustrated in FIG. 1, the three-phase bridge circuit 10 includes, for example, a first MOS transistor Q1, a second MOS transistor Q2, a third MOS transistor Q3, a fourth MOS transistor Q4, a fifth MOS transistor Q5, a sixth MOS transistor Q6, a first diode (parasitic diode) P1, a second diode (parasitic diode) P2, a third diode (parasitic diode) P3, a fourth diode (parasitic diode) P4, a fifth diode (parasitic diode) P5, and a sixth diode (parasitic diode) P6.

The first MOS transistor Q1 has a drain connected to the one end 10a of the three-phase bridge circuit 10 and a source connected to one end of a U-phase coil UL of the motor M. The first MOS transistor Q1 has gate voltage controlled by the control circuit CON. In other words, on/off of the first MOS transistor Q1 is controlled by the control circuit CON.

The first diode P1 has a cathode connected to the drain of the first MOS transistor Q1 and an anode connected to the source of the first MOS transistor Q1.

Furthermore, the second MOS transistor Q2 has a drain connected to the one end 10a of the three-phase bridge circuit 10 and a source connected to one end of a V-phase coil VL of the motor M. The second MOS transistor Q2 has gate voltage controlled by the control circuit CON. In other words, on/off of the second MOS transistor Q2 is controlled by the control circuit CON.

The second diode P2 has a cathode connected to the drain of the second MOS transistor Q2 and an anode connected to the source of the second MOS transistor Q2.

Furthermore, the third MOS transistor Q3 has a drain connected to the one end 10a of the three-phase bridge circuit 10 and a source connected to one end of a W-phase coil WL of the motor M. The third MOS transistor Q3 has gate voltage controlled by the control circuit CON. In other words, on/off of the third MOS transistor Q3 is controlled by the control circuit CON.

The third diode P3 has a cathode connected to the drain of the third MOS transistor Q3 and an anode connected to the source of the third MOS transistor Q3.

Additionally, the fourth MOS transistor Q4 has a drain connected to the one end of the U-phase coil UL of the motor M and a source connected to the other end 10b of the three-phase bridge circuit 10. The fourth MOS transistor Q4 has gate voltage controlled by the control circuit CON. In other words, on/off of the fourth MOS transistor Q4 is controlled by the control circuit CON.

The fourth diode P4 has a cathode connected to the drain of the fourth MOS transistor Q4 and an anode connected to the source of the fourth MOS transistor Q4.

The fifth MOS transistor Q5 has a drain connected to the one end of the V-phase coil VL of the motor M and a source connected to the other end 10b of the three-phase bridge circuit 10. The fifth MOS transistor Q5 has gate voltage controlled by the control circuit CON. In other words, on/off of the fifth MOS transistor Q5 is controlled by the control circuit CON.

The fifth diode P5 has a cathode connected to the drain of the fifth MOS transistor Q5 and an anode connected to the source of the fifth MOS transistor Q5.

The sixth MOS transistor Q6 has a drain connected to the one end of the W-phase coil WL of the motor M and a source connected to the other end 10b of the three-phase bridge circuit 10. The sixth MOS transistor Q6 has gate voltage controlled by the control circuit CON. In other words, on/off of the sixth MOS transistor Q6 is controlled by the control circuit CON.

The sixth diode P6 has a cathode connected to the drain of the sixth MOS transistor Q6 and an anode connected to the source of the sixth MOS transistor Q6.

Meanwhile, the other end of the U-phase coil UL is connected to the other end of each of the V-phase coil VL and the W-phase coil WL as illustrated in FIG. 1.

Additionally, the switch circuit 20 has one end connected to the one end 10a of the three-phase bridge circuit 10 and the other end connected to the output terminal TOUT. On/off of the switch circuit 20 is controlled by the control circuit CON.

As illustrated in FIG. 1, the switch circuit 20 includes, for example, the first control MOS transistor Q7, first control body diode (parasitic diode) P7, second control MOS transistor Q8, and second control body diode (parasitic diode) P8.

The first control MOS transistor Q7 has one end (drain) connected to the one end 10a of the three-phase bridge circuit 10 and the other end (source) connected to the output terminal TOUT. The first control MOS transistor Q7 has gate voltage controlled by the control circuit CON. In other words, on/off of the first control MOS transistor Q7 is controlled by the control circuit CON.

Additionally, the first control body diode P7 has a cathode connected to the one end (drain) of the first control MOS transistor Q7 and an anode connected to the other end (source) of the first control MOS transistor Q7.

Additionally, the second control MOS transistor Q8 has one end (drain) connected to the other end of the output terminal TOUT ((source) the other end of the first control MOS transistor Q7) and the other end connected to the positive electrode of the battery B (second contact C2). The second control MOS transistor Q8 has gate voltage controlled by the control circuit CON. In other words, on/off of the second control MOS transistor Q8 is controlled by the control circuit CON.

Additionally, the second control body diode P8 has a cathode connected to the one end (drain) of the second control MOS transistor Q8 and an anode connected to the other end (source) of the second control MOS transistor Q8.

Furthermore, the first detection bipolar transistor (NPN bipolar transistor) Q10 has a base connected to the other end of the main switch SW1 and an emitter connected to the grounding wire G.

Additionally, the second detection bipolar transistor (PNP bipolar transistor) Q11 has a base connected to a collector of the first detection bipolar transistor Q10, an emitter connected to the cathode of the second control body diode P8 (output terminal TOUT), and a collector connected to the control circuit CON.

Here, the control circuit CON detects voltage at the battery B based on voltage at the emitter of the second detection bipolar transistor Q11, or detects whether the battery is in an open state.

For example, when the main switch SW1 is turned on, current is supplied from the battery B to the base of the first detection bipolar transistor Q10 via the second and first control body diodes P8 and P7 and the main switch SW1. Consequently, the first detection bipolar transistor Q10 is turned on. When the first detection bipolar transistor Q10 is turned on, the second detection bipolar transistor Q11 is turned on with current flowing in the base thereof. Consequently, the control circuit CON is electrically connected to the cathode of the second control body diode via the second detection bipolar transistor Q11.

At this point, the control circuit CON can detect voltage at the battery B by detecting the detection voltage at the cathode of the second control body diode (voltage at the emitter of the second detection bipolar transistor Q11).

Meanwhile, the control circuit CON is supplied with power from the three-phase bridge circuit 10 via the main switch SW1 during kick drive described later. In this case, the control circuit CON determines that the battery is in an open state in the case where voltage at the collector of the second detection bipolar transistor Q11 corresponds to voltage in which the battery is in the open state (current does not flow).

Here, for example, in the case of performing cell drive for the engine, when the main switch SW1 is turned on by a user, voltage (power) of the battery B is supplied from the positive electrode of the battery B to the control circuit CON via the second control body diode P8, first control body diode P7, and main switch SW1 that is turned on.

Then, when the starter switch SW2 is turned on, the control circuit CON turns on the relay switching element Q9 and turns on the relay circuit RY1. Consequently, DC power is received in the three-phase bridge circuit 10 from the battery B via the relay circuit RY1 that is turned on.

Then, the control circuit CON controls the first to sixth MOS transistors Q1 to Q6 of the three-phase bridge circuit 10 and converts the DC power received in the three-phase bridge circuit 10 to AC power to perform motor driving for the motor M. Consequently, the engine connected to the motor M is rotated.

While the engine is rotated by this motor driving, the voltage at the battery B is supplied to the load via the output terminal TOUT, fuse F, and load terminal TR, thereby starting the engine.

Additionally, for example, in the case of performing kick drive for the engine by a user, when the main switch SW1 is turned on and the motor M is rotated by kicking, voltage (power) rectified in the first to sixth diodes P1 to P6 of the three-phase bridge circuit 10 is supplied to the control circuit CON via the main switch SW1 that is turned on.

When the first control MOS transistor Q7 is turned on while the motor M is rotated by the kick drive and the engine is rotated, the voltage rectified in the three-phase bridge circuit 10 is supplied to the load via the output terminal TOUT, fuse F, and load terminal TR, thereby starting the engine.

Meanwhile, in this example of kick drive, assumed is a case where, for example, charging voltage at the battery B is low or the battery B is deteriorated.

Here, an exemplary operation of the vehicular power supply system 100 having the above-described configuration (control method for the vehicular power supply system 100) will be described.

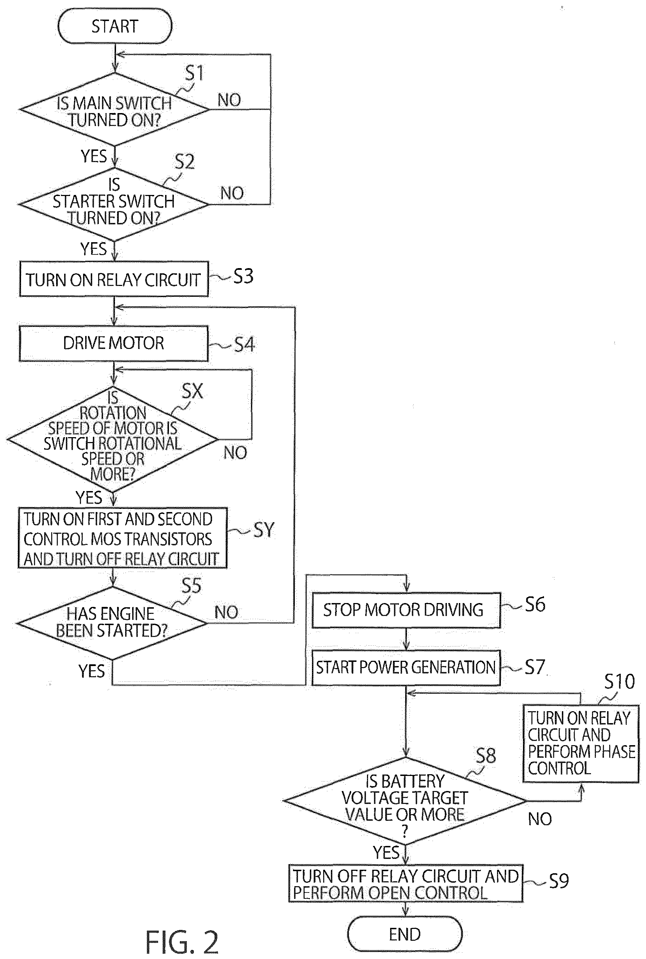

First, an exemplary operation in the case of performing cell drive for the engine of the vehicular power supply system 100 will be described. FIG. 2 is a flowchart illustrating the exemplary operation of the vehicular power supply system 100 illustrated in FIG. 1 in the case of performing the cell drive.

First, the control circuit CON determines whether the main switch SW1 is turned on (step S1). As described above, the control circuit CON determines that the main switch SW1 is turned on when power is supplied from the other end of the main switch SW1.

Next, in the case of determining that the main switch SW1 is turned on, the control circuit CON determines whether the starter switch SW2 is turned on (step S2).

Meanwhile, as described above, in the case where a signal corresponding to voltage at the positive electrode of the battery B is received from the other end of the starter switch SW2 when the starter switch SW2 is turned on, the control circuit CON determines that the starter switch SW2 is turned on. On the other hand, in the case where a signal corresponding to the voltage at the positive electrode of the battery B is not received from the other end of the starter switch SW2 when the starter switch SW2 is turned off, the control circuit CON determines that the starter switch SW2 is turned off.

Then, in the case of determining that the main switch SW1 and the starter switch SW2 are turned on, the control circuit CON turns on the relay circuit RY1 after steps S1 and S2 (step S3).

Meanwhile, in the case of determining in step S1 that the main switch SW1 is not turned on and in the case of determining in step S2 that the starter switch SW2 is not turned on, the processing return returns to step S1.

Then, the control circuit CON turns on the relay circuit RY1 in step S3, and then controls the three-phase bridge circuit 10 to perform motor driving for the motor M (step S4).

Then, the control circuit CON determines whether a rotational speed of the motor M is a preset switch rotational speed (e.g., 1500 rpm) or more, when motor driving for the motor M is performed (step SX).

Then, in the case where the rotational speed of the motor M is the above-mentioned switch rotational speed or more, the control circuit CON turns on the first and second control MOS transistors Q7 and Q8 and further turns off the relay circuit RY1 (step SY).

Then, after turning on the first and second control MOS transistors Q7 and Q8 and further turning off the relay circuit RY1, the control circuit CON determines whether the engine connected to the motor M has been started (step S5).

Meanwhile, as described above, in the case where a detected rotational speed of the motor M is the start rotational speed (e.g., 2000 rpm) or more which is faster than the switch rotational speed, the control circuit CON determines that the engine connected to the motor M has been started. On the other hand, in the case where a detected rotational speed of the motor M is less than the start rotational speed, the control circuit CON determines that the engine is on the way of start.

Then, in the case of determining in step S5 that the engine has been started, the control circuit CON stops motor driving performed by the three-phase bridge circuit 10 (step S6).

Meanwhile, in the case of determining in step S5 that the engine has not been started yet (the engine is on the way of start), the processing returns to step S4 and the control circuit CON continues motor driving for the motor M.

Then, after stopping the motor driving, the control circuit CON starts power generation in the motor M by controlling the three-phase bridge circuit 10 to perform rectification control for AC power supplied from the motor M and outputting DC power from between the one end 10a and the other end of the three-phase bridge circuit 10 (step S7).

After that, in a first state in which the engine is driven and the rectification control is performed in the three-phase bridge circuit 10, the control circuit CON determines whether charging voltage at the battery B is preset target voltage or more (step S8). Meanwhile, as described above, the control circuit CON detects voltage at the one end of the smoothing capacitor C and indirectly acquires the charging voltage at the battery B based on the detected voltage.

When the charging voltage at the battery B is the target voltage or more, the control circuit CON turns off the relay circuit RY1. Furthermore, the control circuit CON controls the three-phase bridge circuit 10 to perform rectification control (synchronous rectification or open control) for AC power supplied from the motor M, and outputs DC power from between the one end 10a and the other end of the three-phase bridge circuit 10.

Additionally, in this step S9, the control circuit CON turns on the second control MOS transistor Q8 and further switches on/off the first control MOS transistor Q7 such that the charging voltage at the battery B approaches the target voltage (step S9). Consequently, the battery B is charged. For example, when the charging voltage at the battery B becomes higher than the target value, the control circuit CON turns off the first control MOS transistor Q7. On the other hand, when the charging voltage at the battery B becomes lower than the target value, the control circuit CON turns on the first control MOS transistor Q7.

On the other hand, in the case where the charging voltage at the battery B is less than the target voltage in the first state of step S8, the control circuit CON turns on the relay circuit RY1, controls the three-phase bridge circuit 10 to perform phase control for the AC power supplied from the motor M, outputs the DC power from between the one end 10a and the other end of the three-phase bridge circuit 10, and turns off the first control MOS transistor Q7 and further turns on the second control MOS transistor Q8 (step S10).

Consequently, the battery B can be charged via the relay circuit RY1 in a state that power generation efficiency of the motor M is high.

By these steps S1 to S10, the cell drive operation for the engine of the vehicular power supply system 100 is executed.

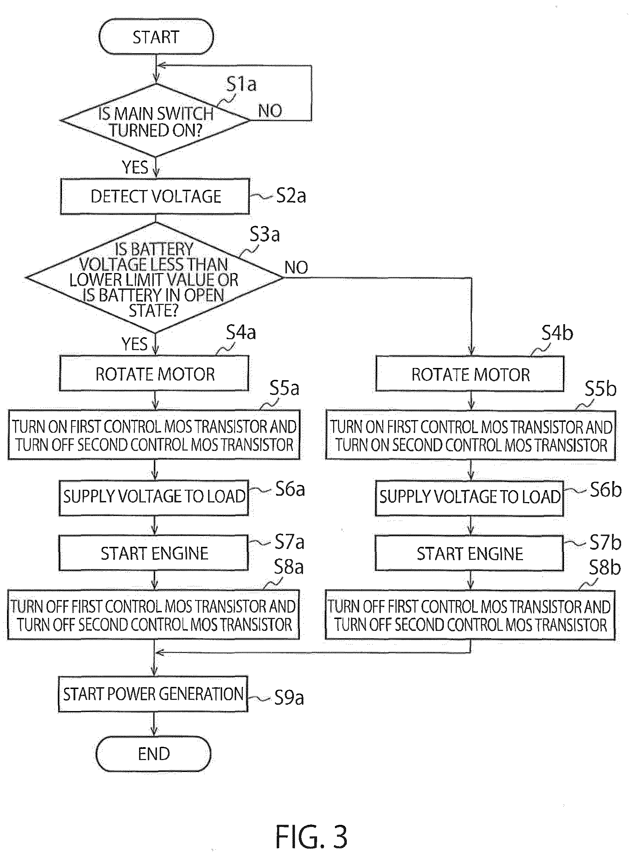

Next, an exemplary operation in the case of performing kick drive for the engine of the vehicular power supply system 100 illustrated in FIG. 1 will be described. FIG. 3 is a flowchart illustrating the exemplary operation of the vehicular power supply system 100 illustrated in FIG. 1 in the case of performing kick drive.

First, the control circuit CON determines whether the main switch SW1 is turned on (step S1a). At this point, the relay circuit RY1 is turned off.

Then, in the case of determining that the main switch SW1 is turned on, the control circuit CON acquires detection voltage at the cathode of the second control body diode P8 (voltage at the emitter of the second detection bipolar transistor Q11) (step S2a).

After that, the control circuit CON detects voltage at the battery B or detects whether the battery B is in an open state based on the acquired detection voltage (step S3a).

Then, when the engine is rotated by kicking (the motor M is rotated) after the control circuit CON detects that the voltage at the battery B is less than a preset lower limit value (the battery B is deteriorated) or detects that the battery B is in the open state in step S3a, the control circuit CON detects that the motor M is rotated (step S4a).

Then, in the case where the motor M is rotated, the control circuit CON turns on the first control MOS transistor Q7 and further turns off the second control MOS transistor (step S5a).

Consequently, the three-phase bridge circuit 10 is controlled to perform rectification control for the AC power supplied from the motor M that is rotated by kicking, and DC power output from between the one end 10a and the other end of the three-phase bridge circuit 10 is supplied to the load via the output terminal TOUT, fuse F, and load terminal TR (step S6a). Consequently, the engine is started.

At this point, since the second control MOS transistor Q8 is turned off, the three-phase bridge circuit 10 is controlled to perform rectification control for AC power supplied from the motor M, and the DC power output from between the one end 10a and the other end of the three-phase bridge circuit 10 is supplied to only the load, but not supplied to the deteriorated battery B. In other words, power generated by kicking can be efficiently used to start the engine.

Then, after turning on the first control MOS transistor Q7 and further turning off the second control MOS transistor Q8, the control circuit CON determines whether the engine connected to the motor M has been started (step S7a).

Subsequently, in the case of determining in step S7a that the engine has been started, the control circuit CON turns off the first and second control MOS transistors Q7 and Q8 (step S8a).

Then, after turning off the first and second control MOS transistors Q7 and Q8, the control circuit CON starts power generation in the motor M by controlling the three-phase bridge circuit 10 to perform rectification control for the AC power supplied from the motor M and outputting DC power from between the one end 10a and the other end 10b of the three-phase bridge circuit 10 (step S9a).

In subsequent operation, the processing proceeds to step S8 in FIG. 1 and operation from step S8 described above is executed.

On the other hand, when the engine is rotated by kicking (the motor M is rotated) after the control circuit CON detects that the voltage at the battery B is the preset lower limit value or more and also the battery B is not in the open state in step S3a, the control circuit CON detects that the motor M is rotated (step S4b).

Then, in the case where the motor M is rotated, the control circuit CON turns on the first control MOS transistor Q7 and further turns on the second control MOS transistor Q8 (step S5b).

Consequently, the three-phase bridge circuit 10 is controlled to perform rectification control for the AC power supplied from the motor M that is rotated by kicking, and DC power output from between the one end 10a and the other end of the three-phase bridge circuit 10 is supplied to the load via the output terminal TOUT, fuse F, and load terminal TR (step S6b). Consequently, the engine is started.

At this point, since the second control MOS transistor Q8 is turned on, the three-phase bridge circuit 10 is controlled to perform rectification control for the AC power supplied from the motor M, and the DC power output from between the one end 10a and the other end of the three-phase bridge circuit 10 is supplied to the load and the battery B.

Then, after turning on the first control MOS transistor Q7 and further turning on the second control MOS transistor Q8, the control circuit CON determines whether the engine connected to the motor M has been started (step S7b).

Subsequently, in the case of determining in step S7b that the engine has been started, the control circuit CON turns off the first and second control MOS transistors Q7 and Q8 (step S8b).

Then, after turning off the first and second control MOS transistors Q7 and Q8, the control circuit CON starts power generation in the motor M by controlling the three-phase bridge circuit 10 to perform rectification control for the AC power supplied from the motor M and outputting DC power from between the one end 10a and the other end 10b of the three-phase bridge circuit 10 (step S9a).

In subsequent operation, the processing proceeds to step S8 in FIG. 1 and operation from step S8 described above is executed.

With the steps S1a to S9a (the case where the battery B is deteriorated or opened) and S4b to S8b (the case where battery B is normal), operation of kick drive is executed for the engine of the vehicular power supply system 100.

With the above steps illustrated in FIGS. 2 and 3, the number of relay circuits is reduced to one while power loss the switch circuit arranged in the charging path of the battery B is reduced in the vehicular power supply system 100 according to one aspect of the present invention.

As described above, the vehicular power supply system 100 according to one aspect of the present invention includes: the motor M connected to an engine of a vehicle; the main switch SW1 controlled to be turned on or off; the starter switch SW2 controlled to be turned on or off and used to start the engine; the battery B having the positive electrode connected to the one end of the starter switch SW2 and the negative electrode connected to the grounding wire G; the relay circuit RY1 adapted to electrically connect the first contact C1 to the second contact C2 connected to the positive electrode when turned on, and adapted to interrupt electrical connection between the first contact C1 and the second contact C2 when turned off; the smoothing capacitor C having the one end connected to the output terminal TOUT and the other end connected to the negative electrode of the battery B; the three-phase bridge circuit 10 having the one end connected to the first contact C1 and the one end of the main switch SW1, having the other end connected to the grounding wire G, and adapted to perform motor driving for the motor M by performing rectification control or phase control for AC power supplied from the motor M and outputting DC power from between the one end and the other end or by converting DC power of the battery B to AC power and supplying the AC power to the motor M; the first control MOS transistor Q7 having the one end connected to the one end of the three-phase bridge circuit 10 and the other end connected to the output terminal TOUT; the first control body diode P7 having the cathode connected to the one end of the first control MOS transistor Q7 and the anode connected to the other end of the first control MOS transistor Q7; the second control MOS transistor Q8 having one end connected to the output terminal TOUT and the other end connected to the positive electrode of the battery B; the second control body diode P8 having the cathode connected to the other end of the second control MOS transistor Q8 and the anode connected to the one end of the second control MOS transistor Q8; and the control circuit CON connected between the other end of the main switch SW1 and the grounding wire G, supplied with power from the other end of the main switch SW1, and adapted to control the three-phase bridge circuit 10, relay circuit RY1, first control MOS transistor Q7, and second control MOS transistor Q8.

Consequently, in the vehicular power supply system 100, the necessary relay circuit is only one relay circuit connected between the positive electrode of the battery and the one end 10a of the three-phase bridge circuit 10, and the number of relay circuits can be reduced to one.

Furthermore, the switch circuit 20 (first and second control MOS transistors Q7 and Q8) is arranged in the charging path during rectification control (synchronous rectification or open control), and the one relay circuit RY1 is arranged in the charging path during phase control of the three-phase bridge circuit 10. Consequently, power loss by the switch circuit 20 in battery charge during the phase control can be reduced.

Particularly, in the case where charging voltage at the battery B is less than the target voltage, the control circuit CON turns on the relay circuit RY1 and controls the three-phase bridge circuit 10 to perform phase control for the AC power supplied from the motor M and outputs the DC power from between the one end and the other end of the three-phase bridge circuit 10, and further turns off the first and second control MOS transistors Q7 and Q8.

On the other hand, in the case where the charging voltage at the battery B is the target voltage or more, the control circuit CON turns off the relay circuit RY1, controls the three-phase bridge circuit 10 to perform rectification control for the AC power supplied from the motor M, outputs the DC power from between the one end and the other end of the three-phase bridge circuit 10, and turns on the second control MOS transistor Q8 and further switches on/off the first control MOS transistor Q7 such that the charging voltage at the battery approaches the target voltage.

Thus, in the case where the charging voltage at the battery B is less than the target voltage, phase control of the three-phase bridge circuit 10 is performed to charge the battery B via the relay circuit RY1. Then, after the charging voltage reaches the target voltage, phase control of the three-phase bridge circuit 10 is stopped, rectification control is started, and the charging voltage can be controlled by the switch circuit 20.

As described above, according to the vehicular power supply system of the present invention, the number of relay circuits can be reduced to one while power loss by the switch circuit arranged in the charging path of the battery is reduced.

While some embodiments of the present invention have been described, the embodiments are provided as examples and not intended to limit the scope of the invention. The embodiments and modifications thereof are included in the invention described in the scope of claims.

## Claims

1. A vehicular power supply system comprising:
a starter-generator (M) connected to an engine of a vehicle;
a main switch (SW1) controlled to be turned on or off;
a starter switch (SW2) controlled to be turned on or off;
wherein the engine can be started either by the starter switch or by kick drive;
a battery (B) having a positive electrode connected to one end of the starter switch (SW2) and a negative electrode connected to a grounding wire (G);
a relay circuit (RY1) configured to electrically connect a first contact (C1) to a second contact (C2) connected to the positive electrode when turned on, and configured to interrupt electrical connection between the first contact (C1) and the second contact (C2) when turned off;
a smoothing capacitor (C) having one end connected to an output terminal (TOUT) and the other end connected to the negative electrode of the battery (B);
a three-phase bridge circuit (10) having one end (10a) connected to the first contact (C1) and to one end of the main switch (SW1), having the other end (10b) connected to the grounding wire (G), and configured to perform motor driving for the starter-generator (M) by performing rectification control or phase control for AC power supplied from the starter-generator (M)and outputting DC power from between the one end (10a) and the other end (10b) or by converting DC power of the battery (B) to AC power and supplying the AC power to the starter-generator (M);
a control circuit (CON) connected between the other end of the main switch (SW1) and the grounding wire (G), supplied with power from the other end of the main switch (SW1), and configured to control the three-phase bridge circuit (10) and the relay circuit (RY1);
**characterized in that** it further comprises:
a first control MOSFET transistor (Q7) having the drain connected to the one end (10a) of the three-phase bridge circuit and the source connected to the output terminal (TOUT);
a first control body diode (P7) having a cathode connected to the drain of the first control MOSFET transistor (Q7) and an anode connected to the source of the first control MOSFET transistor (Q7);
a second control MOSFET transistor (Q8) having the drain connected to the output terminal (TOUT) and the source connected to the positive electrode of the battery (B);
a second control body diode (P8) having a cathode connected to the drain of the second control MOSFET transistor (Q8) and an anode connected to the source of the second control MOSFET transistor (Q8); and
wherein the control circuit is further configured to control the first control MOSFET transistor (Q7) and the second control MOSFET transistor (Q8).

2. The vehicular power supply system according to claim 1, wherein the control circuit (CON) detects voltage at one end of the smoothing capacitor (C), and acquires charging voltage at the battery (B) based on the detected voltage.

3. The vehicular power supply system according to claim 1, further comprising:
a first detection bipolar transistor (Q10) having a base connected to the other end of the main switch and an emitter connected to the grounding wire; and
a second detection bipolar transistor (Q11) having a base connected to a collector of the first detection bipolar transistor, an emitter connected to the cathode of the second control body diode, and a collector connected to the control circuit,
wherein the control circuit (CON) detects voltage at the battery based on voltage at the emitter of the second detection bipolar transistor or detects whether the battery is in an open state.

4. The vehicular power supply system according to claim 1, further comprising:
a relay coil (L) having one end connected to the positive electrode of the battery; and
a relay switching element (Q9) having one end connected to the other end of the relay coil and the other end connected to the grounding wire,
wherein the control circuit (CON) provides electrical connection with the relay coil by turning on the relay switching element while not providing electrical connection with the relay coil by turning off the relay switching element.

5. The vehicular power supply system according to claim 1, wherein a load is connected between the output terminal (TOUT) and the grounding wire (G), and the load is any one of a fuel pump of the engine, an injector of the engine, and an ignition coil of the engine.

6. The vehicular power supply system according to claim 1, wherein the three-phase bridge circuit includes:
a first MOS transistor (Q1) having a drain connected to the one end of the three-phase bridge circuit and a source connected to one end of a U-phase coil of the starter-generator (M), and having gate voltage controlled by the control circuit;
a first diode (P1) having a cathode connected to the drain of the first MOS transistor and an anode connected to the source of the first MOS transistor;
a second MOS transistor (Q2) having a drain connected to the one end of the three-phase bridge circuit and a source connected to one end of a V-phase coil of the starter-generator (M), and having gate voltage controlled by the control circuit;
a second diode (P2) having a cathode connected to the drain of the second MOS transistor and an anode connected to the source of the second MOS transistor;
a third MOS transistor (Q3) having a drain connected to the one end of the three-phase bridge circuit and a source connected to one end of a W-phase coil of the starter-generator (M), and having gate voltage controlled by the control circuit;
a third diode (P3) having a cathode connected to the drain of the third MOS transistor and an anode connected to the source of the third MOS transistor;
a fourth MOS transistor (Q4) having a drain connected to the one end of the U-phase coil of the starter-generator (M)and a source connected to the other end of the three-phase bridge circuit, and having gate voltage controlled by the control circuit;
a fourth diode (P4) having a cathode connected to the drain of the fourth MOS transistor and an anode connected to the source of the fourth MOS transistor;
a fifth MOS transistor (Q5) having a drain connected to the one end of the V-phase coil of the starter-generator (M)and a source connected to the other end of the three-phase bridge circuit, and having gate voltage controlled by the control circuit;
a fifth diode (P5) having a cathode connected to the drain of the fifth MOS transistor and an anode connected to the source of the fifth MOS transistor;
a sixth MOS transistor (Q6) having a drain connected to the one end of the W-phase coil of the starter-generator (M)and a source connected to the other end of the three-phase bridge circuit, and having gate voltage controlled by the control circuit; and
a sixth diode (P6) having a cathode connected to the drain of the sixth MOS transistor and an anode connected to the source of the sixth MOS transistor.

7. A control method for a vehicular power supply system according to claim 1, which is executed by the control circuit (CON), is **characterized by**:
turning on the relay circuit (RY1) in the case of determining that the main switch (SW1) and the starter switch (SW2) are turned on;
controlling the three-phase bridge circuit (10) to perform motor driving after turning on the relay circuit (RY1);
determining whether a rotational speed of the starter-generator (M) is a preset switch rotational speed or more during motor driving;
turning on the first and second control MOSFET transistors (Q7, Q8) and turning off the relay circuit (RY1) in the case where the rotational speed of the starter-generator (M) is the switch rotational speed or more;
determining whether the engine connected to the starter-generator (M) has been started after turning on the first and second control MOSFET (Q7, Q8) transistors and turning off the relay circuit;
stopping motor driving performed by the three-phase bridge circuit (10) in the case of determining that the engine has been started;
controlling, after stopping the motor driving, the three-phase bridge circuit (10) to perform rectification control for AC power supplied from the starter-generator (M), and outputting DC power from between the one end and the other end of the three-phase bridge circuit;
determining whether charging voltage at the battery is preset target voltage or more in a first state in which the engine is driven and rectification control is performed in the three-phase bridge circuit (10);
turning off the relay circuit (RY1) in the case where the charging voltage at the battery (B) is the target voltage or more,
controlling the three-phase bridge circuit (10) to perform rectification control for AC power supplied from the starter-generator (M), outputting DC power from between one end and the other end of the three-phase bridge circuit (10), and turning on the second control MOSFET transistor (Q8) and further switching on/off the first control MOSFET transistor (Q7) such that the charging voltage at the battery (B) approaches the target voltage.

8. The control method for a vehicular power supply system according to claim 7, wherein the method executed by the control circuit (CON) comprises:
acquiring detection voltage at the cathode of the second control body diode (P8) in the case of determining that the main switch (SW1) is turned on;
detecting voltage at the battery (B) or detect whether the battery is in an open state based on the acquired detection voltage;
turning on the first control MOSFET transistor (Q7) and turn off the second control MOSFET transistor (Q8) in a case where the starter-generator (M) is rotated after detecting that voltage at the battery is less than a preset lower limit value or detecting that the battery is in the open state;
determining whether the engine connected to the starter-generator (M) has been started after turning on the first control MOS transistor and turning off the second control MOS transistor;
turning off the first and second control MOS transistors (Q7, Q8) in the case of determining that the engine has been started;
controlling, after turning off the first and second control MOS transistors, the three-phase bridge circuit (10) to perform rectification control for AC power supplied from the starter-generator (M) and output DC power from between the one end and the other end of the three-phase bridge circuit.

9. The control method for a vehicular power supply system according to claim 7, wherein the method executed by the control circuit (CON) comprises:
acquiring detection voltage at the cathode of the second control body diode (P8) in the case of determining that the main switch (SW1) is turned on;
detecting voltage at the battery (B) based on the acquired detection voltage or detect whether the battery is in an open state;
turning on the first control MOSFET transistor (Q7) and turn on the second control MOSFET transistor (Q8) in a case where the starter-generator (M) is rotated after detecting that voltage at the battery is a preset lower limit value or more and the battery is not in the open state;
determining whether the engine connected to the starter-generator (M) has been started after turning on the first control MOS transistor and turning on the second control MOS transistor;
turning off the first and second control MOS transistors (Q7, Q8) in the case of determining that the engine has been started;
controlling, after turning off the first and second control MOS transistors, the three-phase bridge circuit (10) to perform rectification control for AC power supplied from the starter-generator (M) and output DC power from between the one end and the other end of the three-phase bridge circuit.

10. The control method for a vehicular power supply system according to claim 7, wherein
in the case where the charging voltage at the battery (B) is less than the target voltage in the first state, and the control circuit turns on the relay circuit (RY1),
controlling the three-phase bridge circuit (10) to perform phase control for AC power supplied from the starter-generator (M), outputting DC power from between the one end and the other end of the three-phase bridge circuit, and turning off the first control MOSFET transistor, and further turning on the second control MOSFET transistor.

11. The control method for a vehicular power supply system according to claim 7, wherein the control circuit (CON) determines whether the main switch (SW1) is turned on, and in the case where the main switch (SW1) is turned on, the control circuit (CON) determines whether the starter switch (SW2) is turned on.

12. The control method for a vehicular power supply system according to claim 7, wherein the control circuit (CON) is configured to:
be able to detect a rotational speed of the starter-generator (M),
determine that the engine connected to the starter-generator (M) has been started in the case where a rotational speed of the starter-generator (M) is equal to or more than a preset start rotational speed that is higher than the switch rotational speed, and
determine, on the other hand, that the engine is on the way of start in the case where a rotational speed of the starter-generator (M) is less than the start rotational speed.

13. The control method for a vehicular power supply system according to claim 7, wherein
the starter switch (SW2) has the other end connected to the control circuit (CON), and the starter switch (SW2) has the one end connected the positive electrode of the battery (B), and
the control circuit (CON) is configured to:
determine that the starter switch (SW2) is turned on in the case where a signal corresponding to voltage at the positive electrode of the battery (B) is received from the other end of the starter switch (SW2) when the starter switch is turned on; and
determine, on the other hand, that the starter switch (SW2) is turned off in the case where a signal corresponding to voltage at the positive electrode of the battery is not received from the other end of the starter switch when the starter switch is turned off.

14. The control method for a vehicular power supply system according to claim 7, wherein the control circuit (CON) is configured to:
determine that the main switch (SW1) is turned on when power is supplied from the other end of the main switch, and
determine, on the other hand, that the main switch (SW1) is turned off when power is not supplied from the other end of the main switch.

## Patentansprüche

1. Fahrzeugenergieversorgungssystem, das Folgendes umfasst:
einen Startergenerator (M), der mit einer Maschine eines Fahrzeugs verbunden ist;
einen Hauptschalter (SW1), der gesteuert wird, um ein- oder ausgeschaltet zu werden;
einen Anlassschalter (SW2), der gesteuert wird, um ein- oder ausgeschaltet zu werden;
wobei die Maschine entweder durch den Anlassschalter oder durch Kickstart angelassen werden kann;
eine Batterie (B) mit einer positiven Elektrode, die mit einem Ende des Anlassschalters (SW2) verbunden ist, und einer negativen Elektrode, die mit einer Erdungsleitung (G) verbunden ist;
eine Relaisschaltung (RY1), die dafür ausgelegt ist, einen ersten Kontakt (C1) mit einem zweiten Kontakt (C2) elektrisch zu verbinden, der mit der positiven Elektrode verbunden ist, wenn sie eingeschaltet ist, und dafür ausgelegt ist, eine elektrische Verbindung zwischen dem ersten Kontakt (C1) und dem zweiten Kontakt (C2) zu unterbrechen, wenn sie ausgeschaltet ist;
einen Glättungskondensator (C), bei dem ein Ende mit einem Ausgangsanschluss (TOUT) und das andere Ende mit der negativen Elektrode der Batterie (B) verbunden ist;
eine Dreiphasen-Brückenschaltung (10), bei der ein Ende (10a) mit dem ersten Kontakt (C1) und mit einem Ende des Hauptschalters (SW1) verbunden ist, bei der das andere Ende (10b) mit der Erdungsleitung (G) verbunden ist, und die dafür ausgelegt ist, eine Motoransteuerung für den Startergenerator (M) durchzuführen, indem eine Gleichrichtungssteuerung oder Phasensteuerung für Wechselstromenergie durchgeführt wird, die von dem Startergenerator (M) zugeführt wird, und Gleichstromenergie von zwischen dem einen Ende (10a) und dem anderen Ende (10b) ausgegeben wird, oder indem Gleichstromenergie der Batterie (B) in Wechselstromenergie umgeformt wird und die Wechselstromenergie dem Startergenerator (M) zugeführt wird;
eine Steuerschaltung (CON), die zwischen das andere Ende des Hauptschalters (SW1) und die Erdungsleitung (G) geschaltet ist, die von dem anderen Ende des Hauptschalters (SW1) mit Energie versorgt wird und dafür ausgelegt ist, die Dreiphasen-Brückenschaltung (10) und die Relaisschaltung (RY1) zu steuern;
**dadurch gekennzeichnet, dass** es ferner Folgendes umfasst:
einen ersten Steuerungs-MOSFET-Transistor (Q7), bei dem der Drain mit dem einen Ende (10a) der Dreiphasen-Brückenschaltung und die Source mit dem Ausgangsanschluss (TOUT) verbunden ist;
eine erste Steuerungs-Body-Diode (P7) mit einer Kathode, die mit dem Drain des ersten Steuerungs-MOSFET-Transistors (Q7) verbunden ist, und einer Anode, die mit der Source des ersten Steuerungs-MOSFET-Transistors (Q7) verbunden ist;
einen zweiten Steuerungs-MOSFET-Transistor (Q8), bei dem der Drain mit dem Ausgangsanschluss (TOUT) und die Source mit der positiven Elektrode der Batterie (B) verbunden ist;
eine zweite Steuerungs-Body-Diode (P8) mit einer Kathode, die mit dem Drain des zweiten Steuerungs-MOSFET-Transistors (Q8) verbunden ist, und einer Anode, die mit der Source des zweiten Steuerungs-MOSFET-Transistors (Q8) verbunden ist; und
wobei die Steuerschaltung ferner ausgelegt ist, den ersten Steuerungs-MOSFET-Transistor (Q7) und den zweiten Steuerungs-MOSFET-Transistor (Q8) zu steuern.

2. Fahrzeugenergieversorgungssystem nach Anspruch 1,
wobei die Steuerschaltung (CON) eine Spannung an einem Ende des Glättungskondensators (C) erfasst und eine Ladespannung an der Batterie (B) basierend auf der erfassten Spannung erfasst.

3. Fahrzeugenergieversorgungssystem nach Anspruch 1, ferner umfassend:
einen ersten Detektor-Bipolartransistor (Q10) mit einer Basis, die mit dem anderen Ende des Hauptschalters verbunden ist, und einem Emitter, der mit der Erdungsleitung verbunden ist; und
einen zweiten Detektor-Bipolartransistor (Q11) mit einer Basis, die mit einem Kollektor des ersten Detektor-Bipolartransistors verbunden ist, einem Emitter, der mit der Kathode der zweiten Steuerungs-Body-Diode verbunden ist, und einem Kollektor, der mit der Steuerschaltung verbunden ist,
wobei die Steuerschaltung (CON) eine Spannung an der Batterie basierend auf einer Spannung am Emitter des zweiten Detektor-Bipolartransistors erfasst oder erfasst, ob sich die Batterie in einem offenen Zustand befindet.

4. Fahrzeugenergieversorgungssystem nach Anspruch 1, ferner umfassend:
eine Relaisspule (L), bei der ein Ende mit der positiven Elektrode der Batterie verbunden ist; und
ein Relais-Schaltelement (Q9), bei dem ein Ende mit dem anderen Ende der Relaisspule und das andere Ende mit der Erdungsleitung verbunden ist,
wobei die Steuerschaltung (CON) eine elektrische Verbindung mit der Relaisspule bereitstellt, indem das Relais-Schaltelement eingeschaltet wird, während sie keine elektrische Verbindung mit der Relaisspule bereitstellt, indem das Relais-Schaltelement ausgeschaltet wird.

5. Fahrzeugenergieversorgungssystem nach Anspruch wobei eine Last zwischen den Ausgangsanschluss (TOUT) und die Erdungsleitung (G) geschaltet ist und die Last eins von einer Kraftstoffpumpe der Maschine, einem Einspritzer der Maschine und einer Zündspule der Maschine ist.

6. Fahrzeugenergieversorgungssystem nach Anspruch wobei die Dreiphasen-Brückenschaltung Folgendes umfasst:
einen ersten MOS-Transistor (Q1) mit einem Drain, der mit dem einen Ende der Dreiphasen-Brückenschaltung verbunden ist, und einer Source, die mit einem Ende einer U-Phasen-Spule des Startergenerators (M) verbunden ist, und bei dem eine Gatespannung von der Steuerschaltung gesteuert wird;
eine erste Diode (P1) mit einer Kathode, die mit dem Drain des ersten MOS-Transistors verbunden ist, und einer Anode, die mit der Source des ersten MOS-Transistors verbunden ist;
einen zweiten MOS-Transistor (Q2) mit einem Drain, der mit dem einen Ende der Dreiphasen-Brückenschaltung verbunden ist, und einer Source, die mit einem Ende einer V-Phasen-Spule des Startergenerators (M) verbunden ist, und bei dem eine Gatespannung von der Steuerschaltung gesteuert wird;
eine zweite Diode (P2) mit einer Kathode, die mit dem Drain des zweiten MOS-Transistors verbunden ist, und einer Anode, die mit der Source des zweiten MOS-Transistors verbunden ist;
einen dritten MOS-Transistor (Q3) mit einem Drain, der mit dem einen Ende der Dreiphasen-Brückenschaltung verbunden ist, und einer Source, die mit einem Ende einer W-Phasen-Spule des Startergenerators (M) verbunden ist, und bei dem eine Gatespannung von der Steuerschaltung gesteuert wird;
eine dritte Diode (P3) mit einer Kathode, die mit dem Drain des dritten MOS-Transistors verbunden ist, und einer Anode, die mit der Source des dritten MOS-Transistors verbunden ist;
einen vierten MOS-Transistor (Q4) mit einem Drain, der mit dem einen Ende der U-Phasen-Spule des Startergenerators (M) verbunden ist, und einer Source, die mit dem anderen Ende der Dreiphasen-Brückenschaltung verbunden ist, und bei dem eine Gatespannung von der Steuerschaltung gesteuert wird;
eine vierte Diode (P4) mit einer Kathode, die mit dem Drain des vierten MOS-Transistors verbunden ist, und einer Anode, die mit der Source des vierten MOS-Transistors verbunden ist;
einen fünften MOS-Transistor (Q5) mit einem Drain, der mit dem einen Ende der V-Phasen-Spule des Startergenerators (M) verbunden ist, und einer Source, die mit dem anderen Ende der Dreiphasen-Brückenschaltung verbunden ist, und bei dem eine Gatespannung von der Steuerschaltung gesteuert wird;
eine fünfte Diode (P5) mit einer Kathode, die mit dem Drain des fünften MOS-Transistors verbunden ist, und einer Anode, die mit der Source des fünften MOS-Transistors verbunden ist;
einen sechsten MOS-Transistor (Q6) mit einem Drain, der mit dem einen Ende der W-Phasen-Spule des Startergenerators (M) verbunden ist, und einer Source, die mit dem anderen Ende der Dreiphasen-Brückenschaltung verbunden ist, und bei dem eine Gatespannung von der Steuerschaltung gesteuert wird;
und
eine sechste Diode (P6) mit einer Kathode, die mit dem Drain des sechsten MOS-Transistors verbunden ist, und einer Anode, die mit der Source des sechsten MOS-Transistors verbunden ist.

7. Steuerungsverfahren für ein Fahrzeugenergieversorgungssystem nach Anspruch das durch die Steuerschaltung (CON) ausgeführt wird, **gekennzeichnet durch**:
Einschalten der Relaisschaltung (RY1) im Falle des Bestimmens, dass der Hauptschalter (SW1) und der Anlassschalter (SW2) eingeschaltet sind;
Steuern der Dreiphasen-Brückenschaltung (10), um eine Motoransteuerung nach dem Einschalten der Relaisschaltung (RY1) durchzuführen;
Bestimmen, ob eine Drehzahl des Startergenerators (M) während der Motoransteuerung eine voreingestellte Schaltdrehzahl oder mehr ist;
Einschalten des ersten und des zweiten Steuerungs-MOSFET-Transistors (Q7, Q8) und Ausschalten der Relaisschaltung (RY1) in dem Fall, dass die Drehzahl des Startergenerators (M) die Schaltdrehzahl oder mehr ist;
Bestimmen, nach dem Einschalten des ersten und des zweiten Steuerungs-MOSFET-Transistors (Q7, Q8) und dem Ausschalten der Relaisschaltung, ob die Maschine, die mit dem Startergenerator (M) verbunden ist, angelassen wurde;
Anhalten der Motoransteuerung, die durch die Dreiphasen-Brückenschaltung (10) durchgeführt wird, im Falle des Bestimmens, dass die Maschine angelassen wurde;
Steuern der Dreiphasen-Brückenschaltung (10) nach dem Anhalten der Motoransteuerung, um eine Gleichrichtungssteuerung für Wechselstromenergie durchzuführen, die von dem Startergenerator (M) zugeführt wird, und Ausgeben von Gleichstromenergie von zwischen dem einen Ende und dem anderen Ende der Dreiphasen-Brückenschaltung;
Bestimmen, ob eine Ladespannung an der Batterie eine voreingestellte Sollspannung oder mehr ist, in einem ersten Zustand, in dem die Maschine angesteuert wird und eine Gleichrichtungssteuerung in der Dreiphasen-Brückenschaltung (10) durchgeführt wird;
Ausschalten der Relaisschaltung (RY1) in dem Fall, dass die Ladespannung an der Batterie (B) die Sollspannung oder mehr ist,
Steuern der Dreiphasen-Brückenschaltung (10), um eine Gleichrichtungssteuerung für Wechselstromenergie durchzuführen, die von dem Startergenerator (M) zugeführt wird, Ausgeben von Gleichstromenergie von zwischen einem Ende und dem anderen Ende der Dreiphasen-Brückenschaltung (10) und Einschalten des zweiten Steuerungs-MOSFET-Transistors (Q8) und ferner Ein-/Ausschalten des ersten Steuerungs-MOSFET-Transistors (Q7), so dass sich die Ladespannung an der Batterie (B) der Sollspannung annähert.

8. Steuerungsverfahren für ein Fahrzeugenergieversorgungssystem nach Anspruch 7, wobei das Verfahren, das von der Steuerschaltung (CON) ausgeführt wird, Folgendes umfasst:
Erfassen einer Detektionsspannung an der Kathode der zweiten Steuerungs-Body-Diode (P8) im Falle des Bestimmens, dass der Hauptschalter (SW1) eingeschaltet ist;
Erfassen von Spannung an der Batterie (B) oder Erfassen, ob sich die Batterie in einem offenen Zustand befindet, basierend auf der erfassten Detektionsspannung;
Einschalten des ersten Steuerungs-MOSFET-Transistors (Q7) und Ausschalten des zweiten Steuerungs-MOSFET-Transistors (Q8), falls der Startergenerator (M) gedreht wird, nachdem erkannt wird, dass eine Spannung an der Batterie niedriger als ein voreingestellter unterer Grenzwert ist, oder, dass sich die Batterie in dem offenen Zustand befindet;
Bestimmen, nach dem Einschalten des ersten Steuerungs-MOS-Transistors und dem Ausschalten des zweiten Steuerungs-MOS-Transistors, ob die Maschine, die mit dem Startergenerator (M) verbunden ist, angelassen wurde;
Ausschalten des ersten und des zweiten Steuerungs-MOS-Transistors (Q7, Q8) im Falle des Bestimmens, dass die Maschine angelassen wurde;
Steuern der Dreiphasen-Brückenschaltung (10) nach dem Ausschalten des ersten und des zweiten Steuerungs-MOS-Transistors, um Gleichrichtungssteuerung für Wechselstromenergie durchzuführen, die von dem Startergenerator (M) zugeführt wird, und Gleichstromenergie von zwischen dem einen Ende und dem anderen Ende der Dreiphasen-Brückenschaltung auszugeben.

9. Steuerungsverfahren für ein Fahrzeugenergieversorgungssystem nach Anspruch 7, wobei das Verfahren, das von der Steuerschaltung (CON) ausgeführt wird, Folgendes umfasst:
Erfassen einer Detektionsspannung an der Kathode der zweiten Steuerungs-Body-Diode (P8) im Falle des Bestimmens, dass der Hauptschalter (SW1) eingeschaltet ist;
Erfassung von Spannung an der Batterie (B) basierend auf der erfassten Detektionsspannung oder Erfassen, ob sich die Batterie in einem offenen Zustand befindet;
Einschalten des ersten Steuerungs-MOSFET-Transistors (Q7) und des zweiten Steuerungs-MOSFET-Transistors (Q8), falls der Startergenerator (M) gedreht wird, nachdem erkannt wird, dass eine Spannung an der Batterie ein voreingestellter unterer Grenzwert oder mehr ist und sich die Batterie nicht in dem offenen Zustand befindet;
Bestimmen, nach dem Einschalten des ersten Steuerungs-MOS-Transistors und dem Einschalten des ersten Steuerungs-MOS-Transistors, ob die Maschine, die mit dem Startergenerator (M) verbunden ist, angelassen wurde;
Ausschalten des ersten und des zweiten Steuerungs-MOS-Transistors (Q7, Q8) im Falle des Bestimmens, dass die Maschine angelassen wurde;
Steuern der Dreiphasen-Brückenschaltung (10) nach dem Ausschalten des ersten und des zweiten Steuerungs-MOS-Transistors, um Gleichrichtungssteuerung für Wechselstromenergie durchzuführen, die von dem Startergenerator (M) zugeführt wird, und Gleichstromenergie von zwischen dem einen Ende und dem anderen Ende der Dreiphasen-Brückenschaltung auszugeben.

10. Steuerungsverfahren für ein Fahrzeugenergieversorgungssystem nach Anspruch 7, wobei das Verfahren in dem Fall, dass die Ladespannung an der Batterie (B) niedriger als die Sollspannung in dem ersten Zustand ist und die Steuerschaltung die Relaisschaltung (RY1) einschaltet, umfasst:
Steuern der Dreiphasen-Brückenschaltung (10), um eine Phasensteuerung für Wechselstromenergie durchzuführen, die von dem Startergenerator (M) zugeführt wird, Ausgeben von Gleichstromenergie von zwischen dem einen Ende und dem anderen Ende der Dreiphasen-Brückenschaltung, und Ausschalten des ersten Steuerungs-MOSFET-Transistors und ferner Einschalten des zweiten Steuerungs-MOSFET-Transistors.

11. Steuerungsverfahren für ein Fahrzeugenergieversorgungssystem nach Anspruch 7, wobei die Steuerschaltung (CON) bestimmt, ob der Hauptschalter (SW1) eingeschaltet ist, und in dem Fall, dass der Hauptschalter (SW1) eingeschaltet ist, die Steuerschaltung (CON) bestimmt, ob der Anlassschalter (SW2) eingeschaltet ist.

12. Steuerungsverfahren für ein Fahrzeugenergieversorgungssystem nach Anspruch 7, wobei die Steuerschaltung (CON) dafür ausgelegt ist:
eine Drehzahl des Startergenerators (M) zu erkennen,
zu bestimmen, dass die Maschine, die mit dem Startergenerator (M) verbunden ist, angelassen wurde, in dem Fall, dass eine Drehzahl des Startergenerators (M) gleich oder größer als eine voreingestellte Startdrehzahl ist, die höher als die Schaltdrehzahl ist, und in dem Fall, dass eine Drehzahl des Startergenerators (M) niedriger als die Startdrehzahl ist, andererseits zu bestimmen, dass die Maschine auf dem Weg des Anlassens ist.

13. Steuerungsverfahren für ein Fahrzeugenergieversorgungssystem nach Anspruch 7, wobei das eine Ende des Anlassschalters (SW2) mit der positiven Elektrode der Batterie (B) verbunden ist und das andere Ende des Anlassschalters (SW2) mit der Steuerschaltung (CON) verbunden ist, und
die Steuerschaltung (CON) dafür ausgelegt ist:
zu bestimmen, dass der Anlassschalter (SW2) eingeschaltet ist, wenn ein Signal, das einer Spannung an der positiven Elektrode der Batterie (B) entspricht, von dem anderen Ende des Anlassschalters (SW2) empfangen wird, wenn der Anlassschalter eingeschaltet ist; und
andererseits zu bestimmen, dass der Anlassschalter (SW2) ausgeschaltet ist, wenn ein Signal, das einer Spannung an der positiven Elektrode der Batterie entspricht, von dem anderen Ende des Anlassschalters nicht empfangen wird, wenn der Anlassschalter ausgeschaltet ist.

14. Steuerungsverfahren für ein Fahrzeugenergieversorgungssystem nach Anspruch 7, wobei die Steuerschaltung (CON) dafür ausgelegt ist:
zu bestimmen, dass der Hauptschalter (SW1) eingeschaltet ist, wenn Energie von dem anderen Ende des Hauptschalters zugeführt wird, und
andererseits zu bestimmen, dass der Hauptschalter (SW1) ausgeschaltet ist, wenn Energie von dem anderen Ende des Hauptschalters nicht zugeführt wird.

## Revendications

1. Système d'alimentation électrique de véhicule comprenant :
un générateur-démarreur (M) branché à un moteur d'un véhicule ;
un commutateur principal (SW1) commandé afin d'être mis sous tension ou hors tension ;
un commutateur de démarreur (SW2) commandé afin d'être mis sous tension ou hors tension ;
dans lequel le moteur peut être démarré soit par le commutateur de démarreur soit par démarrage au pied ;
une batterie (B) ayant une électrode positive connectée à une extrémité du commutateur de démarreur (SW2) et une électrode négative connectée à un fil de mise à la terre (G) ;
un circuit de relais (RY1) configuré pour connecter électriquement un premier contact (C1) à un second contact (C2) connecté à l'électrode positive lorsqu'il est mis sous tension, et configuré pour interrompre une connexion électrique entre le premier contact (C1) et le second contact (C2) lorsqu'il est mis hors tension ;
un condensateur de lissage (C) ayant une extrémité connectée à une borne de sortie (TOUT) et l'autre extrémité connectée à l'électrode négative de la batterie (B) ;
un circuit de pont triphasé (10) ayant une extrémité (10a) connectée au premier contact (C1) et à l'extrémité du commutateur principal (SW1), l'autre extrémité (10b) étant connectée au fil de mise à la terre (G) et configurée pour effectuer un entraînement du moteur pour le générateur-démarreur (M) en effectuant une commande de rectification ou une commande de phase pour l'alimentation CA alimentée à partir du générateur-démarreur (M) et émettre une puissance (CC) entre une extrémité (10a) et l'autre extrémité (10b) ou en convertissant l'alimentation CC de la batterie (B) en alimentation CA et en alimentant l'alimentation CA dans le générateur-démarreur (M) ;
un circuit de commande (CON) connecté entre l'autre extrémité du commutateur principal (SW1) et le fil de mise à la terre (G), alimenté par une alimentation électrique provenant de l'autre extrémité du commutateur principal (SW1), es configuré pour commander le circuit de pont triphasé (10) et le circuit de relais (RY1);
**caractérisé en ce que** il comprend en outre :
un premier transistor de commandement MOSFET (Q7) ayant le drain connecté à une extrémité (10a) du circuit de pont triphasé et la source connectée à la borne de sortie (TOUT) ;
une première diode de corps de commande (P7) ayant une cathode connectée au drain du premier transistor de commande MOSFET (Q7) et une anode connectée à la source du premier transistor de commande MOSFET (Q7) ;
un second transistor de commande MOSFET (Q8) ayant le drain connecté à la borne de sortie (TOUT) et la source connectée à l'électrode positive de la batterie (B) ;
une seconde diode de corps de commande (P8) ayant une cathode connectée au drain du second transistor de commande MOSFET (Q8) et une anode connectée à la source du second transistor de commande MOSFET (Q8) ; et
dans lequel le circuit de commande est en outre configuré pour commander le premier transistor de commande MOSFET (Q7) et le second transistor de commande MOSFET (Q8).

2. Système d'alimentation électrique de véhicule selon la revendication 1, dans lequel le circuit de commande (CON) détecte une tension à une extrémité du condensateur de lissage (C) et acquiert une tension de charge au niveau de la batterie (B) sur la base de la tension détectée.

3. Système d'alimentation électrique de véhicule selon la revendication 1, comprenant en outre :
un premier transistor bipolaire de détection (Q10) ayant une base connectée à l'autre extrémité du commutateur principal et un émetteur connecté au fil de mise à la terre ; et
un second transistor bipolaire de détection (Q11) ayant une base connectée à un collecteur du premier transistor bipolaire de détection, un émetteur connecté à la cathode de la seconde diode de corps de commande dans lequel le circuit de commande (CON) détecte une tension au niveau de la batterie sur la base de la tension au niveau de l'émetteur du second transistor bipolaire de détection ou détecte si la batterie est dans un état ouvert.

4. Système d'alimentation électrique de véhicule selon la revendication 1, comprenant en outre :
une bobine de relais (L) ayant une extrémité connectée à l'électrode positive de la batterie ; et
un élément de commutation de relais (Q9) ayant une extrémité connectée à l'autre extrémité de la bobine de relais et l'autre extrémité connectée au fil de mise à la terre,
dans lequel le circuit de commande (CON) fournit une connexion électrique à la bobine de relais en mettant sous tension l'élément de commutation de relais tout en ne fournissant pas une connexion électrique avec la bobine de relais en mettant hors tension l'élément de commutation de relais.

5. Système d'alimentation électrique de véhicule selon la revendication 1, dans lequel une charge connectée entre la borne de sortie (TOUT) et le fil de mise à la terre (G), et la charge est n'importe laquelle d'une pompe à carburant du moteur, un injecteur du moteur et une bobine d'allumage du moteur.

6. Système d'alimentation électrique de véhicule selon la revendication 1, dans lequel le circuit de ponts triphasé inclut :
un premier transistor MOS (Q1) ayant un drain connecté à une extrémité du circuit de pont triphasé et une source connectée à une extrémité d'une bobine de phase en U du générateur- démarreur (M), et ayant une tension de grille commandée par le circuit de commande ;
une première diode (P1) ayant une cathode connectée au drain du premier transistor MOS et une anode connectée à la source du premier transistor MOS;
un second transistor MOS (Q2) ayant un drain connecté à une extrémité du circuit de pont triphasé et une source connectée à une extrémité d'une bobine de phase en V du générateur-démarreur (M) ayant une tension de grille commandée par le circuit de commande ;
une seconde diode (P2) ayant une cathode connectée au drain du second transistor MOS et une anode connectée à la source du second transistor MOS;
un troisième transistor MOS (Q3) ayant un drain connecté à une extrémité du circuit de pont triphasé et une source connectée à une extrémité d'une bobine de phase en W du générateur-démarreur (M), et ayant une tension de grille commandée par le circuit de commande ;
une troisième diode (P3) et une cathode connectée au drain du troisième transistor MOS et une anode connectée à la source du troisième transistor MOS;
un quatrième transistor MOS (Q4) ayant un drain connecté à l'extrémité de la bobine de phase en U du générateur-démarreur (M) et une source connectée à l'autre extrémité du circuit de ponts triphasé, ayant une tension de grille commandée par le circuit de commande ;
une quatrième diode (P4) ayant une cathode connectée au drain du quatrième transistor MOS et une anode connectée à la source du quatrième transistor MOS ;
un cinquième transistor MOS (Q5) ayant un drain connecté à une extrémité de la bobine de phase en V du générateur-démarreur (M) et une source connectée à l'autre extrémité du circuit de pont triphasé, et ayant une tension de grille commandée par le circuit de commande ;
une cinquième diode (P5) ayant une cathode connectée au drain du cinquième transistor MOS et une anode connectée à la source du cinquième transistor MOS ;
un sixième transistor MOS (Q6) ayant un drain connecté à une extrémité de la bobine de phase en W du générateur-démarreur (M) et une source connectée à l'autre extrémité du circuit en pont triphasés, ayant une tension de grille commandée par le circuit de commande ; et
une sixième diode (P6) ayant une cathode connectée au drain du sixième transistor MOS et une anode connectée à la source du sixième transistor MOS.

7. Procédé de commande pour un système d'alimentation électrique de véhicule selon la revendication 1 qui est exécuté par le circuit de commande (CO), **caractérisé par** :
mettre sous tension le circuit de relais (RY1) dans le cas de la détermination que le commutateur principal (SW1) et le commutateur de démarreur (SW2) sont mis sous tension ;
commander le circuit de pont triphasé (10) pour effectuer un entraînement de moteur après la mise sous tension du circuit de relais (RY1) ;
déterminer si une vitesse de rotation du générateur-démarreur (M) et une vitesse de rotation du commutateur préréglé ou supérieure pendant l'entraînement du moteur ;
mettre sous tension le premier et le second transistor MOSFET (Q7,Q8) et mettre hors tension le circuit de relais (RY1) dans le cas où la vitesse de rotation du générateur-démarreur (M) est la vitesse de rotation du commutateur ou supérieure ;
déterminer si le moteur connecté au générateur-démarreur (M) a été démarré après la mise sous tension du premier et du second transistor de commande MOSFET (Q7,Q8) et la mise hors tension du circuit de relais ;
arrêter l'entraînement du moteur effectué par le circuit de pont triphasé (10) dans le cas où il est déterminé que le moteur a été démarré ;
commander, après l'arrêt de l'entraînement du moteur, le circuit de pont triphasé (10) pour effectuer une commande de rectification pour l'alimentation CA alimentée à partir du générateur-démarreur (M), et délivrer une alimentation CC entre une extrémité et l'autre extrémité du circuit de pont triphasé ;
déterminer si une tension de charge au niveau de la batterie est une tension cible préréglée ou supérieure dans un premier état dans lequel le moteur est entraîné et une commande de rectification est effectuée dans le circuit de pont triphasé (10) ;
mettre hors tension le circuit de relais (RY1) dans le cas où la tension de charge au niveau de la batterie (B) et la tension cible ou supérieure, commander le circuit de pont triphasé (10) pour effectuer une commande de rectification pour l'alimentation CA alimentée à partir du générateur-démarreur (M), délivrer une alimentation CC entre l'extrémité et l'autre extrémité du circuit de pont triphasé (10) et mettre sous tension le second transistor de commande MOSFET (Q8) et en outre mettre sous tension/hors tension le premier transistor de commande MOSFET (Q7) de sorte que la tension de charge au niveau de la batterie (B) se rapproche de la tension cible.

8. Procédé de commande pour un système d'alimentation électrique de véhicule selon la revendication 7, dans lequel le procédé exécuté par le circuit de commande (CON) comprend de :
acquérir une tension de détection niveau de la cathode de la seconde diode de corps de commande (P8) dans le cas où il est déterminé que le commutateur principal (SW1) est mis sous tension ;
détecter une tension au niveau de la batterie (B) où détecter si la batterie est dans un état ouvert sur la base de la tension de détection acquise ;
mettre sous tension le premier transistor de commande MOSFET (Q7) et mettre hors tension le second transistor de commande MOSFET (Q8) dans un cas ou le générateur-démarreur (M) est tourné après la détection que la tension au niveau de la batterie est inférieure à une valeur limite inférieure préréglée ou la détection que la batterie est dans l'état ouvert ;
déterminer si le moteur connecté au générateur-démarreur (M) a été démarré après la mise sous tension du premier transistor MOS de commande et mettre hors tension le second transistor MOS de commande ;
mettre hors tension le premier le second transistor MOS de commande (Q7,Q8) dans le cas où il est déterminé que le moteur a été démarré, commander, après la mise hors tension du premier et du second transistor MOS de commande, le circuit de pont triphasé (10) pour effectuer une commande de rectification pour l'alimentation CA alimentée à partir du générateur-démarreur (M) et émettre une alimentation CC entre une extrémité et l'autre extrémité du circuit de pont triphasé.

9. Procédé de commande pour un système d'alimentation électrique de véhicule selon la revendication 7, dans lequel le procédé exécuté par le circuit de commande (CON) comprend de :
acquérir un une tension de détection au niveau de la cathode de la seconde diode de corps de commande (P8) dans le cas où il est déterminé que le commutateur principal (SW1) est mis sous tension ;
détecter une tension au niveau de la batterie (B) sur la base de la tension de détection acquise ou détectée sur si la batterie est dans un état ouvert ;
mettre sous tension le premier transistor de commande MOSFET (Q7) et mettre sous tension le second transistor de commande MOSFET (Q8) dans un cas ou le générateur-démarreur (M) est tourné après la détection que la tension au niveau de la batterie est une valeur limite inférieure préréglée ou supérieure et la batterie n'est pas dans l'état ouvert ;
déterminer si le moteur connecté au générateur-démarreur (M) a été démarré après la mise sous tension du premier transistor MOS de commande et la mise sous tension du second transistor MOS de commande ;
mettre hors tension le premier et le second transistor MOS de commande (Q7,Q8) dans le cas où il est déterminé que le moteur a été démarré ;
commande, après la mise hors tension du premier et du second transistor MOS de commande, le circuit de pont triphasé (10) pour effectuer une commande de rectification pour l'alimentation CA alimentée à partir du générateur-démarreur (M) et délivrer une alimentation CC entre une extrémité et l'autre extrémité du circuit de pont triphasé.

10. Procédé de commande pour un système d'alimentation électrique de véhicule selon la revendication 7, dans lequel
dans le cas où la tension de charge au niveau de la batterie (B) est inférieure à la tension cible dans le premier état, et le circuit de commande met sous tension le circuit de relais (RY1),
commander le circuit de pont triphasé (10) pour effectuer une commande de phase pour l'alimentation CA alimentée à partir du générateur-démarreur (M), délivrer une alimentation CC entre une extrémité et l'autre extrémité du circuit de pont triphasé et mettre hors tension le premier transistor de commande MOSFET et en outre mettre sous tension le second transistor de commande MOSFET.

11. Procédé de commande pour un système d'alimentation électrique de véhicule selon la revendication 7, dans lequel le circuit de commande (CON) détermine si le commutateur principal (SW1) est mis sous tension et dans le cas où le commutateur principal (SW1) est mis sous tension, le circuit de commande (CON) détermine si le commutateur de démarreur (SW2) est mis sous tension.

12. Procédé de commande pour un système d'alimentation électrique de véhicule selon la revendication 7, dans lequel le circuit de commande (CON) est configuré pour :
être apte à détecter une vitesse de rotation du générateur-démarreur (M) ;
déterminer que le moteur branché au générateur-démarreur (M) a été démarré dans le cas où une vitesse de rotation du générateur-démarreur (M) est égale ou supérieure à une vitesse de rotation de démarrage préréglé qui est supérieure à la vitesse de rotation de commutateur, et
déterminer, d'autre part, que le moteur est sur le point de démarrer dans le cas où une vitesse de rotation du générateur-démarreur (M) est inférieure à la vitesse de rotation de démarrage.

13. Procédé de commande pour un système d'alimentation électrique de véhicule selon la revendication 7, dans lequel
le commutateur de démarreur (SW2) a l'autre extrémité connectée au circuit de commande (CON), et le commutateur de démarreur (SW2) a l'extrémité connectée à l'électrode positive de la batterie (B), et
le circuit de commande (CON) est configuré pour :
déterminer que le commutateur de démarreur (SW2) est mis sous tension dans le cas où un signal correspondant à une tension au niveau de l'électrode positive de la batterie (B) est reçu depuis l'autre extrémité du commutateur de démarreur (SW2) lorsque le commutateur de démarreur est mis sous tension ; et
déterminer, d'autre part, que le commutateur de démarrage (SW2) est mis hors tension dans le cas où un signal correspondant à une tension au niveau de l'électrode positive de la batterie n'est pas reçu depuis l'autre extrémité du commutateur de démarreur lorsque le commutateur de démarreur est mis hors tension.

14. Procédé de commande pour un système d'alimentation électrique de véhicule selon la revendication 7, dans lequel le circuit de commande (CON) est configuré pour :
déterminer que le commutateur principal (SW1) est mis sous tension lorsqu'une alimentation électrique est alimentée à partir de l'autre extrémité du commutateur principal, et
déterminer, d'autre part, que le commutateur principal (SW1) est mise hors tension lorsqu'une alimentation électrique n'est pas alimentée à partir de l'autre extrémité du commutateur principal.
